# EUROPEAN PATENT APPLICATION

(11) **EP 2 813 927 A2**
(43) Date of publication of application: **17.12.2014**
(21) Application number: 14172455.9
(22) Date of filing: 13.06.2014
(51) Int. Cl.: G06F 3/041, G06F 3/042

(54) **Adaptive light source driving optical system for integrated touch and hover**

(30) Priority: 13.06.2013 US 201361834538 P; 28.04.2014 US 201414263953
(71) Applicant: Samsung Display Co., Ltd., Gyeonggi-Do (KR)
(72) Inventor: Bastani, Behnam, Gyeonggi-Do (KR)
(74) Representative: Mounteney, Simon James

(57) **Abstract**

An optical touch device includes: illumination sources; sensors corresponding to the illumination sources; a processor; and a memory, wherein the memory stores instructions that, when executed by the processor, cause the processor to: detect a plurality of proximity regions by a first illumination process; receive information about the plurality of proximity regions based on a second illumination process; compare the plurality of proximity regions with the information to determine the presence or absence of a connection feature for each proximity region of the plurality of proximity regions; and identify a proximity region as an intended gesture if the absence of a connection feature is determined or evaluate a proximity region based on additional information if the presence of a connection feature is determined, wherein the proximity region is rejected if a false result is returned based on the evaluation.

## Description

### FIELD

Embodiments of the present invention relate generally to a driving system for an optical touch device and a method of driving an optical touch device.

### BACKGROUND

Touch devices such as touchscreen displays detect touch points based on reflected signals generated by components typically embedded inside the display. Signal generation sources may be light sources such as light emitting diodes (LEDs), sound wave generators, or other types of signal generation sources. The reflected signals are detected by sensors embedded inside or on the periphery of the display. The sensors may be any type of sensor for detecting the reflected signals and variation in the reflected signals.

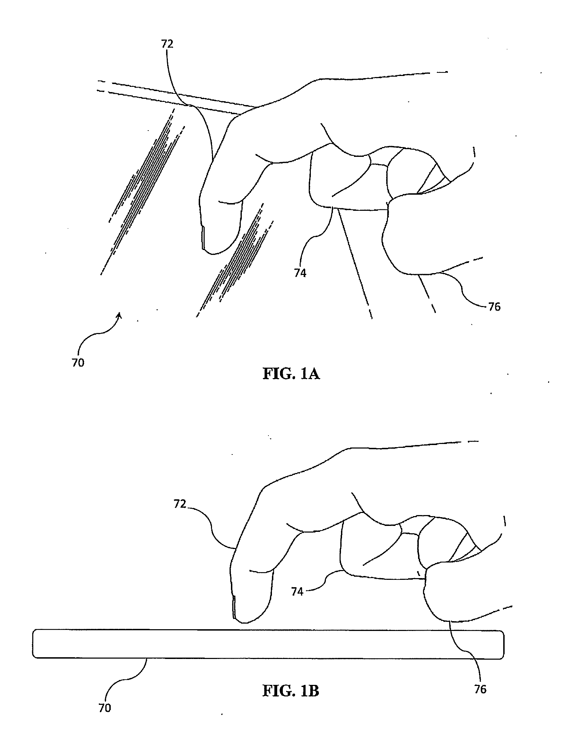

In optical touch devices, light sources are used to illuminate the screen and optical sensors are used to sense reflected light. Touch points are detected based on changes in the reflected light. As such, gestures of an object near the screen (e.g., a finger or a stylus) can be detected while the object is hovering over (e.g., in front of) the screen and before the object physically touches the screen. A user's gesture can therefore be detected even though the user does not apply any physical touch, or applies only a light touch, to the screen. Thus, detected regions of interest may be either points of contact of the object with the screen (touch points) or regions where the object is hovering in front of the screen. In general, objects closer to the screen reflect the light, generating "hot spots" or peak signals of reflected light that are read by the optical sensors. For instance, as a fingertip moves away from a touchscreen where the optical sensors are embedded, the amount (e.g., percentage) of light reflected by the fingertip that reaches the sensors decreases at an increased rate. As a result, there is a loss in signal strength and it becomes more difficult for the optical sensors to differentiate features of objects from one another. The sensors may have difficulty differentiating a fingertip from other hand features (e.g., a palm or hand joints), and difficulty differentiating multiple close fingertips from one large fingertip. FIG. 1A depicts an example of a single-hand gesture where one finger is intended to be involved in the gesture. FIG. 1B is a side view of the single-hand hover gesture depicted in FIG. 1A. A touchscreen 70 may not be able to distinguish between an intended (or deliberate) gesture such as the hovering fingertip 72 and a non-intended (or incidental) gesture such as hovering by other fingers 74, 76. From the perspective of the optical sensors, it may be difficult to determine whether a detected hot spot is an independent (or new) fingertip or a continuation of the finger/hand. Thus, it may be difficult to detect the location of a touch or hover gesture accurately.

### SUMMARY

The present invention seeks to provide a driving system for an optical touch device and a method of driving an optical touch device that provide more accurate detection of intended (or deliberate) gestures while rejecting (or removing) unintended (or incidental) gestures. Embodiments of the present invention also set out to increase the dynamic range of information that can be detected (or captured) by optical sensors, to reduce false (or unintended) detections.

According to an embodiment of the present invention, an optical touch device includes: illumination sources; sensors corresponding to the illumination sources; a processor; and a memory, and the memory stores instructions that, when executed by the processor, cause the processor to: detect a plurality of hot spots by a first illumination process; receive information about the plurality of hot spots based on a second illumination process; compare the plurality of hot spots with the information to determine the presence or absence of a connection feature for each hot spot of the plurality of hot spots; and identify a hot spot as an intended gesture if the absence of a connection feature is determined or evaluate a hot spot based on additional information if the presence of a connection feature is determined, and the hot spot is rejected if a false result is returned based on the evaluation.

Selected ones of the illumination sources may be sequentially illuminated during the first illumination process and the plurality of hot spots may be detected according to a response signal received from the sensors corresponding to the selected ones of the illumination sources.

The illumination sources may be concurrently illuminated during the second illumination process and the information about the plurality of hot spots may be based on a response signal received from the sensors.

The additional information may include a size of the hot spot and the hot spot may be evaluated by comparing the size of the hot spot with a profile size of an intended gesture, and the false result may be returned if the size of the hot spot exceeds the profile size.

The profile size may be between about 24 mm² and about 100 mm².

The additional information may include a shape of the hot spot and the hot spot may be evaluated by comparing the shape of the hot spot with a profile shape of an intended gesture, and the false result may be returned if the shape of the hot spot does not correspond to the profile shape.

The profile shape may be a round shape.

The additional information may include a movement speed of the hot spot based on n previous frames, where n is a natural number, and the hot spot may be evaluated by comparing the movement speed of the hot spot with a profile movement speed of an intended gesture. The false result may be returned if the movement speed of the hot spot is slower than the profile movement speed.

The additional information may include a movement pattern of the hot spot based on n previous frames, where n is a natural number, and the hot spot may be evaluated by comparing the movement pattern of the hot spot with a profile movement pattern of an intended gesture. The false result may be returned if the movement pattern of the hot spot does not correspond to the profile movement pattern.

The additional information may include at least one of n previous frames, where n is a natural number, size of the hot spot, shape of the hot spot, number of hot spots, and distance between hot spots, and the additional information may be stored in a lookup table.

According to another embodiment of the present invention, a method of driving an optical touch device including illumination sources and sensors includes: detecting, by one or more processors, a plurality of hot spots by a first illumination process; receiving, by the one or more processors, information about the plurality of hot spots based on a second illumination process; comparing, by the one or more processors, the plurality of hot spots with the information to determine the presence or absence of a connection feature for each hot spot of the plurality of hot spots; and identifying, by the one or more processors, a hot spot as an intended gesture if the absence of a connection feature is determined or evaluating, by the one or more processors, a hot spot based on additional information if the presence of a connection feature is determined, and the hot spot is rejected if a false result is returned based on the evaluation.

The first illumination process may include: sequentially illuminating selected ones of the illumination sources; and receiving a response signal from the sensors corresponding to the selected ones of the illumination sources.

The second illumination process may include: concurrently illuminating the illumination sources; and receiving a response signal from the sensors.

The additional information may include a size of the hot spot and the evaluating may include comparing the size of the hot spot with a profile size of an intended gesture. The false result may be returned if the size of the hot spot exceeds the profile size.

The profile size may be between about 24 mm² and about 100 mm².

The additional information may include a shape of the hot spot and the evaluating may include comparing the shape of the hot spot with a profile shape of an intended gesture. The false result may be returned if the shape of the hot spot does not correspond to the profile shape.

The profile shape may be a round shape.

The additional information may include a movement speed of the hot spot based on n previous frames, where n is a natural number, and the evaluating may include comparing the movement speed of the hot spot with a profile movement speed of an intended gesture. The false result may be returned if the movement speed of the hot spot is slower than the profile movement speed.

The additional information may include a movement pattern of the hot spot based on n previous frames, where n is a natural number, and the evaluating may include comparing the movement pattern of the hot spot with a profile movement pattern of an intended gesture. The false result may be returned if the movement pattern of the hot spot does not correspond to the profile movement pattern.

The additional information may include at least one of n previous frames, where n is a natural number, size of the hot spot, shape of the hot spot, number of hot spots, and distance between hot spots, and the additional information may be stored in a lookup table.

At least some of the above and other features of the invention are set out in the claims.

### BRIEF DESCRIPTION OF THE DRAWINGS

These and other features and aspects of the present invention will be better understood by reference to the following detailed description when considered in conjunction with the accompanying drawings, briefly described below.
**FIG. 1A** depicts an example of a single-hand hover gesture where one finger is intended to be involved in the gesture.
**FIG. 1** **B** is a side view of the single-hand hover gesture depicted in FIG. 1A.
**FIG. 2A** depicts another example of a single-hand gesture where one finger is intended to be involved in the gesture.
**FIG. 2B** is a sensitivity map (heat map) showing sensor readings for a fingertip and a palm.
**FIG. 3A** is an image of gestures detected during sequential illumination.
**FIG. 3B** is an image of the same gestures in FIG. 3A, detected during parallel illumination.
**FIG. 4A** is a diagram of an optical touch device according to an embodiment of the present invention.
**FIG. 4B** is a flow chart of a method of driving an optical touch device according to an embodiment of the present invention.
**FIG. 5A** is a sensitivity map (heat map) showing sensor readings during sequential illumination according to an embodiment of the present invention.
**FIG. 5B** is a sensitivity map (heat map) showing sensor readings during parallel illumination according to an embodiment of the present invention.
**FIG. 6A** is a sensitivity map (heat map) showing sensor readings during sequential illumination according to an embodiment of the present invention.
**FIG. 6B** is a sensitivity map (heat map) showing sensor readings during parallel illumination according to an embodiment of the present invention.
**FIG. 6C** is a sensitivity map (heat map) showing sensor readings subjected to a rejection process according to an embodiment of the present invention.

### DETAILED DESCRIPTION

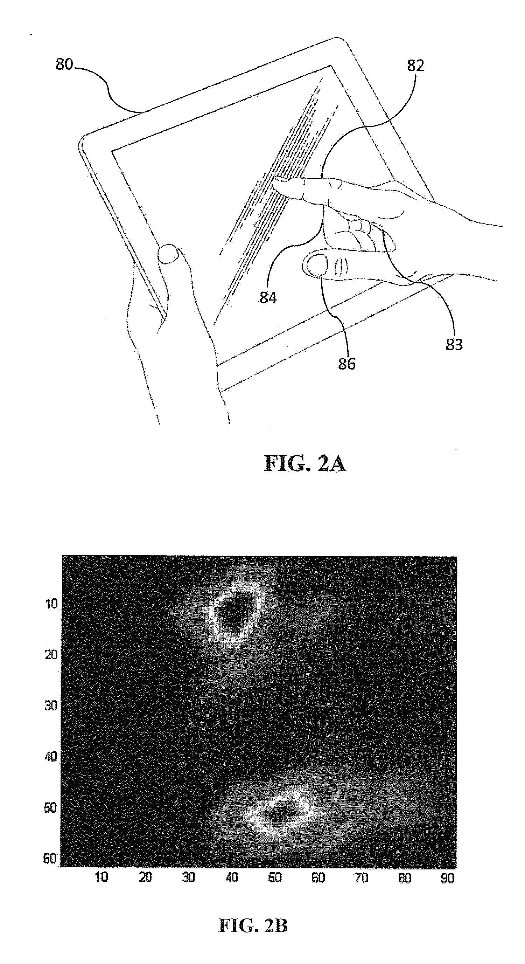

FIG. 2A depicts another example of a single-hand gesture where one finger is intended to be involved in the gesture. One potential issue with this gesture is the possibility of false positive fingertip detection. In FIG. 2A the intended gesture is the hovering finger 82. Due to the proximity of the palm 83 of the gesturing hand to the display 80, however, high signal reflection may result, causing the sensors to incorrectly detect the palm 83 or other fingers 84, 86 as an intended gesture. FIG. 2B is a sensitivity map (heat map) showing sensor readings for a fingertip and a palm of a gesturing hand. As shown, a single finger hovering over a touch screen may result in two or more peak signals at respective proximity regions, wherein the finger or another part of the hand, for example, overlaps the screen. For convenience, such regions will be referred to as 'hot spots' herein. In FIG. 2B, the upper left hot spot corresponds to a fingertip and the lower right hot spot corresponds to a palm. In some embodiments, one hot spot may correspond to a fingertip and another hot spot may correspond to one or more hand joints.

In the case of optical systems, two approaches for driving optical touch devices are parallel illumination and sequential illumination. In sequential illumination, one signal source (e.g., light source) or one set of signal sources (e.g., light sources) is turned on at a time (e.g., sequentially). Optical sensors corresponding to the activated signal sources, for example, those that are located adjacent (or close to) the activated signal sources, are used to measure the response signal. Features that are close to the screen exhibit greater reflection of light and the optical sensors perceive these areas of reflected light as hot spots.

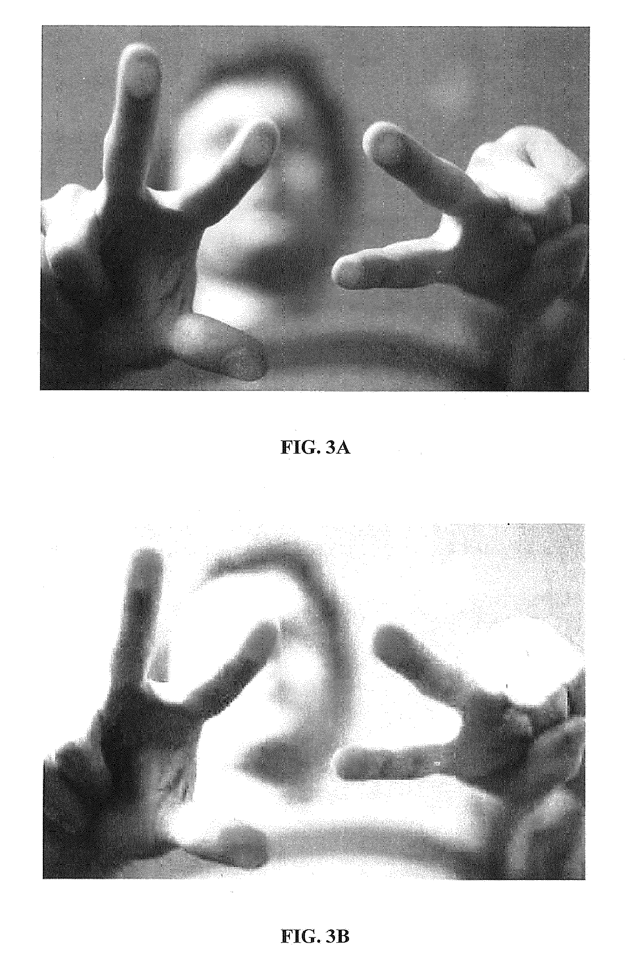

FIG. 3A is an image of gestures detected during sequential illumination and FIG. 3B is an image of the same gestures detected during parallel illumination. As shown in FIG. 3A, the sequential activation of the signal sources (e.g., light sources) during sequential illumination reduces the glare generated by the gesturing object and allows for more accurate detection and differentiation of object features. Therefore, with sequential illumination, multiple fingertips may be more accurately detected. However, the reduced overall generated illumination also results in a lower signal-to-noise ratio (SNR) sensor reading, which may make it more difficult to accurately differentiate object features (e.g., differentiate a palm and other hand features from a fingertip). Additionally, information that two detected hot spots correspond to connected (or joined) features of the hand may be lost due to the decreased illumination and lower SNR.

As shown in FIG. 3B, in contrast to the sequential illumination shown in FIG. 3A, parallel illumination provides a brighter illumination source and improves the SNR of the signal received by the sensors. For example, in parallel illumination, all signal sources (e.g., light sources) are driven concurrently (e.g., simultaneously). As a result, parallel illumination provides a brighter diffused illumination source, which improves the SNR of the signal received by the sensors for darker regions (i.e., regions that are farther away from the screen). However, because of the increased brightness, the reflected signals may have increased glare, making it more difficult for the optical sensors to accurately evaluate gestures and differentiate detected objects from one another. For example, the glare may make it more difficult to differentiate two fingertips from each other. Accordingly, a method of driving an optical touch device that can more accurately recognize gestures (e.g., complicated gestures) while preserving high SNR for background information (e.g., features that are farther away from the screen), is desirable.

Embodiments of the present invention relate generally to a driving system for an optical touch device and a method of driving an optical touch device. According to embodiments of the present invention, an optical touch device includes illumination sources; sensors corresponding to the illumination sources; a processor; and a memory, and the memory stores instructions that, when executed by the processor, cause the processor to: detect a plurality of hot spots by a first illumination process; receive information about the plurality of hot spots based on a second illumination process; compare the plurality of hot spots with the information; determine the presence or absence of a connection feature for each hot spot of the plurality of hot spots, based on the comparison; and identify a hot spot as an intended gesture if the absence of a connection feature is determined or evaluate a hot spot based on additional information if the presence of a connection feature is determined, and the hot spot is rejected if a false result is returned based on the evaluation.

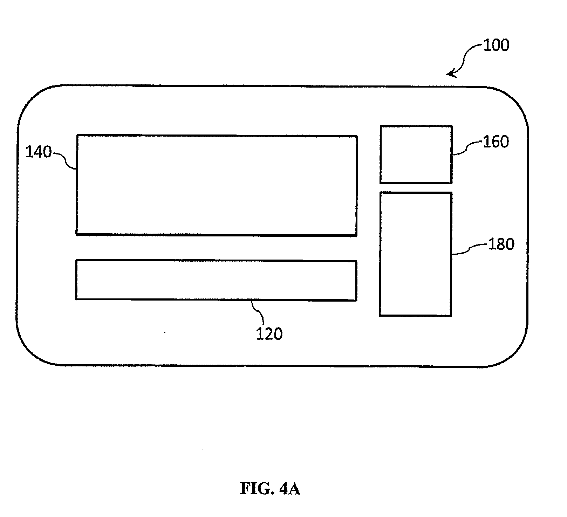

FIG. 4A is a diagram of an optical touch device according to an embodiment of the present invention. The optical touch device 100 includes sensors 120, illumination sources 140, a memory 160 and a processor 180. In some embodiments the sensors 120 are arranged to correspond to the illumination sources 140. The illumination sources 140 may be LEDs and the sensors may be photo transistors, but embodiments of the present invention are not limited thereto. The illumination sources may be any source for generating light and the sensors may be any type of sensor for detecting reflected light and variation in the reflected light. The memory 160 may store instructions for execution by the processor 180.

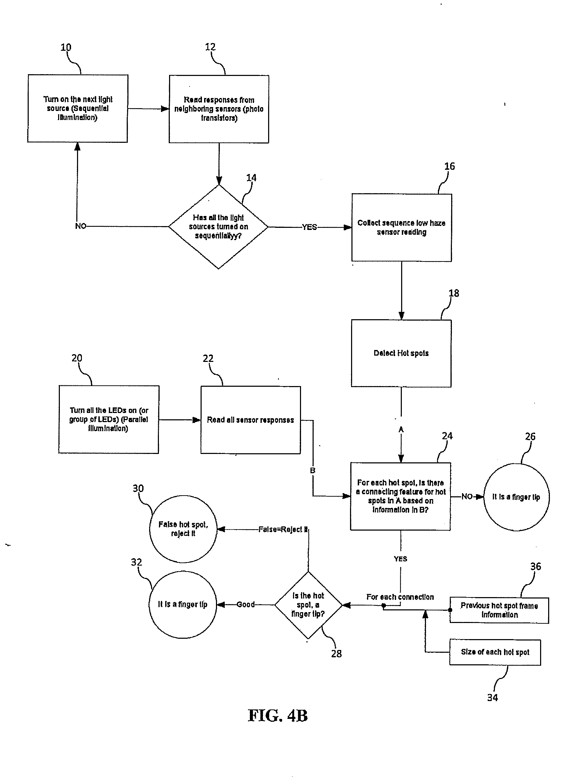

FIG. 4B is a flow chart of a method of driving an optical touch device according to an embodiment of the present invention. In boxes 10, 12, 14, 16 and 18, a first illumination process is performed to detect regions of interest corresponding to features of an object in proximity to the touch screen. According to an embodiment, the first illumination process is a sequential illumination process in which signal sources (e.g., light sources) are driven sequentially. In box 10, each signal source (e.g., light source) or set of signal sources of the optical system is sequentially turned on. In box 12, the device receives and reads responses from optical sensors corresponding to the activated signal sources (e.g., light sources), for example, those sensors near the illuminated region. In one embodiment, the signal sources are LEDs and the optical sensors are photo transistors. The signal sources and the optical sensors may be different in other embodiments as those skilled in the art would appreciate.

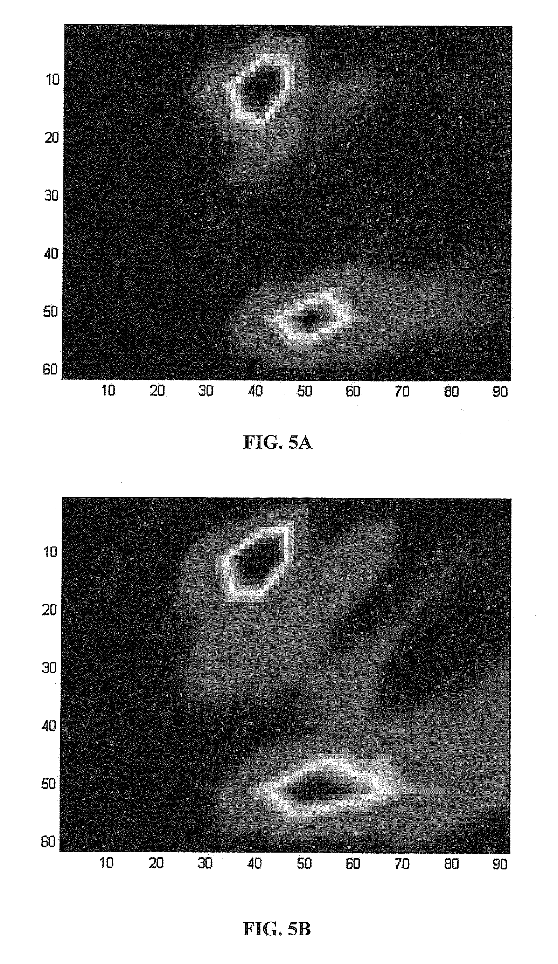

FIG. 5A is a sensitivity map (heat map) showing sensor readings during sequential illumination according to an embodiment of the present invention. The numbers on the axes represent xy location coordinates and the shaded areas represent varying degrees of likelihood of detecting a region of interest as a fingertip at an xy location. In FIG. 5A, during the first illumination process, features closest to the screen reflect the greatest amount of light and appear as the brightest regions (indicated by R and Y) on the sensitivity map (heat map).

Referring again to FIG. 4B, in box 14, the device checks whether or not all the signal sources have been turned on sequentially. If not all of the signal sources have been turned on sequentially, the process returns to box 10 and continues to sequentially illuminate the signal sources. If all of the signal sources have been turned on sequentially, the method proceeds to box 16, where a set of signals with low internal reflectance (referred to as "haze") is detected, and the corresponding sensor readings are received. Then, in box 18, hot spots are detected based on the sensor readings.

Once the regions of interest have been detected using the first illumination process as described above, a second illumination process is performed to gather information about the regions of interest and remove any regions corresponding to unintended gestures. The second illumination process is implemented in boxes 20, 22, 24 and 26. In box 20, the signal sources (e.g., light sources) are turned on concurrently (e.g., simultaneously). In one embodiment, all of the signal sources may be turned on concurrently (e.g., simultaneously) to provide a bright illumination source, or only a subset of the signal sources may be turned on in order to save power or improve the signal reading. In box 22, the device receives and reads responses from all of the optical sensors.

FIG. 5B is a sensitivity map (heat map) showing sensor readings during parallel illumination according to an embodiment of the present invention. Comparing FIG. 5B with FIG. 5A, because of the increased brightness created by the second illumination process in FIG. 5B, the sensitivity map in FIG. 5B has an improved SNR, and thus more information can be gathered about features farther away from the screen as well as features detected during the first illumination process.

Referring again to FIG. 4B, according to an embodiment, the information collected during the second illumination process is used to detect the presence or absence of connection features or patterns associated with the regions of interest detected in the first illumination process. In box 24, each of the hot spots detected in box 18 during the first illumination process is compared with hot spots and information detected in box 22 during the second illumination process, including information about present connection features or patterns. Based on the comparison, the device evaluates the likelihood of detected regions of interest being connected to one another. The presence of connection features indicates that the detected feature is connected to other features. For example, a group of connected hot spots may indicate the presence of an unintended palm or hand joint as opposed to an intended fingertip.

If there are no connection features (i.e., an absence of connection features associated with a region of interest), the device determines in box 26 that the region of interest corresponds to an intended gesture such as a fingertip. If the presence of connection features is detected for a region of interest, as shown in box 24 each connection is further analyzed in boxes 28, 30, 32, 34 and 36 based on additional information to determine whether the region of interest corresponds to an intended gesture. As explained in further detail below, the assessment may take the form of a rejection process during which each region of interest having a connection feature is evaluated against one or more criteria, and false hot spots (e.g., hot spots generated by non-intended gestures such as a hovering palm) are rejected. As shown in box 30, if the evaluation returns a false result, the hot spot is determined not to be an intended gesture such as a fingertip, and the hot spot is rejected. As shown in box 32, if the evaluation returns an affirmative result, the hot spot is determined to correspond to an intended gesture such as a fingertip.

According to one embodiment, shape analysis is used as part of the rejection process to evaluate a region of interest having a connection feature. In one embodiment, a calibration procedure to predict finger touch shape and complex gestures may also be used as part of the rejection process. A finger touch may have a size and shape profile defined by typical finger touch attributes. The profile size may be a width, an area, a radius, and/or any other suitable measurement. According to one embodiment, an intended finger touch hot spot has a smaller size than hot spots for other hand features and may have a more defined or predictable shape. The profile shape may be a function of finger position relative to the display and other fingers. In one embodiment, the profile size may be between about 24 mm² and about 100 mm² and the profile shape may be a round shape. However, the shape is not limited to a shape of a finger touch, and may also be a shape of a stylus touch or a fingernail touch. A false result may be returned and a hot spot may be rejected if its size exceeds the profile size or if it has a shape that does not correspond to (or match) the profile shape. For example, a false hot spot that is actually a palm may look like two connected bright round objects. Because the hot spot does not correspond to (or match) the profile shape of a smaller, single round object, it would be recognized as a false hot spot and rejected. In FIG. 4B, a hot spot is evaluated at box 28 using size information of the hot spot provided at box 34. In one embodiment, the additional information about size and/or shape for each hot spot is measured and collected by the optical sensors during the first and/or second illumination processes.

According to another embodiment, heuristic analysis is used as part of the rejection process to evaluate a region of interest having a connection feature. Heuristic information used to evaluate regions of interest may include movement patterns, speed of movement, previous patterns and intensity variation of the hot spot. In FIG. 4B, a number of previous n touch frames provided in box 36 may be used to build a heuristic for a hot spot, where n is a natural number. In one embodiment, the additional information about movement pattern and speed of each hot spot is measured and collected by the optical sensors during the first and/or second illumination processes. For example, a fingertip may exhibit a distinctive movement pattern and may move at a faster speed relative to other parts of the hand such as a palm (e.g., a fingertip may move more often). On the other hand, movement patterns that are steady for a long period of time may represent undesirable features (or targets) that should be rejected, such as a palm or reflection from another part of the finger. The device may store information about intended gesture movement patterns as a profile movement pattern and may store information about intended gesture movement speed as a profile movement speed. If the movement speed of a hot spot is slower than the profile movement speed or if the movement pattern of a hot spot does not correspond to the profile movement pattern, a false result may be returned.

According to yet another embodiment, both shape analysis and heuristic analysis may be used as part of the rejection process to more accurately evaluate a connected region of interest. In one embodiment, a basic heuristic model uses a lookup table to predict whether or not a given series of patterns represent a gesture or fingertip. The inputs to the lookup table may include additional information about the hot spots such as previous frames, size of current hot spots, shape of current hot spots, number of current hot spots, and distance between the subject hot spot and other current hot spots.

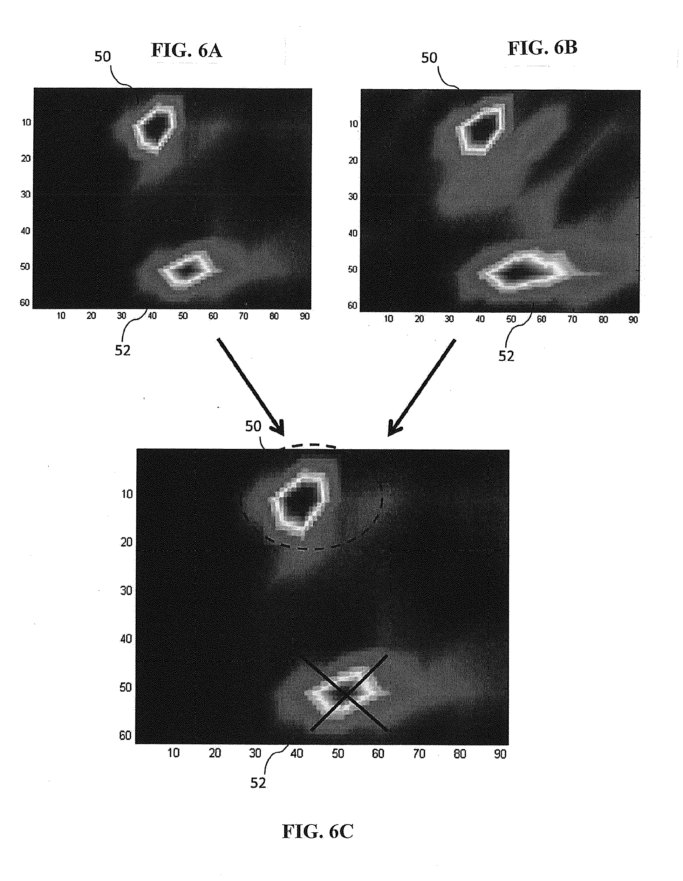

**FIG. 6A** is a sensitivity map (heat map) showing sensor readings during sequential illumination according to an embodiment of the present invention. **FIG. 6B** is a sensitivity map (heat map) showing sensor readings during parallel illumination according to an embodiment of the present invention. **FIG. 6C** is a sensitivity map (heat map) showing sensor readings subjected to a rejection process according to an embodiment of the present invention.

According to an embodiment, the sensor readings shown in FIG. 6A, which are collected during sequential illumination, are compared with the sensor readings shown in FIG. 6B, which are collected during parallel illumination. Both hot spots 50 and 52 sensed in FIG. 6B are associated with connection features that are located near each hot spot. Accordingly, each hot spot 50 and 52 is evaluated against a set of criteria to determine whether it is an intended gesture or should be rejected as a false hot spot (or unintended gesture). Using shape analysis and/or heuristic analysis as described above, the upper left hot spot 50 is determined to be a "true" or intended fingertip as shown in FIG. 6C. By contrast, the lower right hot spot 52 is determined to be a "false" (or unintended) hot spot and is rejected. For example, when shape analysis is used the upper left hot spot 50 may be determined to have a size that meets (or matches) a profile size or size range and a shape that corresponds to a profile shape such as a round shape. The lower right hot spot 52 may be determined to have a size that exceeds a profile size and/or does not correspond to a profile shape. In another embodiment, heuristics analysis may be used to compare previous n touch frames for the upper left hot spot 50. Based on a faster movement speed and/or more varied movement pattern of the upper left hot spot 50, an affirmative result is returned. Heuristics analysis may also be used to compare previous n touch frames for the lower right hot spot 52. Based on a slower movement speed and/or a less active movement pattern of the lower hot spot 52, a false result is returned. When a false result is returned, the lower right hot spot 52 is rejected as an unintended gesture.

According to an aspect of the present invention, a driving system and method according to embodiments of the present invention increase the dynamic range of optical sensors by controlling illumination processes to detect finer, brighter features more accurately while preserving higher SNR for background information. According to another aspect of the present invention, a driving system and method for an optical system according to embodiments more accurately detects and differentiates features from one another and rejects unintended gestures to improve a touch process of a user.

While the present invention has been particularly shown and described with reference to example embodiments thereof, it will be understood by those of ordinary skill in the art that various changes in form and details may be made therein without departing from the scope of the present invention as defined by the following claims and their equivalents.

## Claims

1. An optical touch device comprising:
a screen;
illumination sources;
sensors;
a processor; and
a memory, wherein the memory stores instructions that, when executed by the processor, cause the processor to:
detect a plurality of proximity regions wherein an object overlaps a portion of the screen by a first illumination process;
receive information about the plurality of proximity regions based on a second illumination process;
compare the plurality of proximity regions with the information to determine the presence or absence of a connection feature for each proximity region of the plurality of proximity regions; and
identify a proximity region as an intended gesture if the absence of a connection feature is determined or evaluate a proximity region based on additional information if the presence of a connection feature is determined, wherein the proximity region is rejected if a false result is returned based on the evaluation.

2. An optical touch device according to claim 1, wherein selected ones of the illumination sources are sequentially illuminated during the first illumination process and the plurality of proximity regions are detected according to a response signal received from the sensors corresponding to the selected ones of the illumination sources.

3. An optical touch device according to claim 1 or 2, wherein the illumination sources are concurrently illuminated during the second illumination process and the information about the plurality of proximity regions is based on a response signal received from the sensors.

4. An optical touch device according to any preceding claim, wherein the additional information comprises a size of the proximity region and the proximity region is evaluated by comparing the size of the proximity region with a profile size of an intended gesture, and wherein the false result is returned if the size of the proximity region exceeds the profile size.

5. An optical touch device according to claim 4, wherein the profile size is between about 24 mm² and about 100 mm².

6. An optical touch device according to any preceding claim, wherein the additional information comprises a shape of the proximity region and the proximity region is evaluated by comparing the shape of the proximity region with a profile shape of an intended gesture, and wherein the false result is returned if the shape of the proximity region does not correspond to the profile shape.

7. An optical touch device according to claim 6, wherein the profile shape is a round shape.

8. An optical touch device according to any preceding claim, wherein the additional information comprises a movement speed of the proximity region based on n previous frames, where n is a natural number, and the proximity region is evaluated by comparing the movement speed of the proximity region with a profile movement speed of an intended gesture, and wherein the false result is returned if the movement speed of the proximity region is slower than the profile movement speed.

9. An optical touch device according to any preceding claim, wherein the additional information comprises a movement pattern of the proximity region based on n previous frames, where n is a natural number, and the proximity region is evaluated by comparing the movement pattern of the proximity region with a profile movement pattern of an intended gesture, and wherein the false result is returned if the movement pattern of the proximity region does not correspond to the profile movement pattern.

10. An optical touch device according to claim 1, wherein the additional information comprises at least one of n previous frames, where n is a natural number, size of the proximity region, shape of the proximity region, number of proximity regions, and distance between proximity regions, and wherein the additional information is stored in a lookup table.

11. A method of driving an optical touch device comprising a screen, illumination sources and sensors, the method comprising:
detecting, by one or more processors, a plurality of proximity regions wherein an object overlaps a portion of the screen by a first illumination process;
receiving, by the one or more processors, information about the plurality of proximity regions based on a second illumination process;
comparing, by the one or more processors, the plurality of proximity regions with the information to determine the presence or absence of a connection feature for each proximity region of the plurality of hot spots; and
identifying, by the one or more processors, a proximity region as an intended gesture if the absence of a connection feature is determined or evaluating, by the one or more processors, a proximity region based on additional information if the presence of a connection feature is determined, wherein the proximity region is rejected if a false result is returned based on the evaluation.

12. A method according to claim 11, wherein the first illumination process comprises:
sequentially illuminating selected ones of the illumination sources; and
receiving a response signal from the sensors corresponding to the selected ones of the illumination sources.

13. A method according to claim 11 or 12, wherein the second illumination process comprises:
concurrently illuminating the illumination sources; and
receiving a response signal from the sensors.

14. A method according to claim 11, 12 or 13, wherein the additional information comprises a size of the proximity region and the evaluating comprises comparing the size of the proximity region with a profile size of an intended gesture, and wherein the false result is returned if the size of the proximity region exceeds the profile size.

15. A method according to claim 14, wherein the profile size is between about 24 mm² and about 100 mm².

16. A method according to one of claims 11 to 15, wherein the additional information comprises a shape of the proximity region and the evaluating comprises comparing the shape of the proximity region with a profile shape of an intended gesture, and wherein the false result is returned if the shape of the proximity region does not correspond to the profile shape.

17. A method according to claim 16, wherein the profile shape is a round shape.

18. A method according to one of claims 11 to 17, wherein the additional information comprises a movement speed of the proximity region based on n previous frames, where n is a natural number, and the evaluating comprises comparing the movement speed of the proximity region with a profile movement speed of an intended gesture, and wherein the false result is returned if the movement speed of the proximity region is slower than the profile movement speed.

19. A method according to one of Claims 11 to 18, wherein the additional information comprises a movement pattern of the proximity region based on n previous frames, where n is a natural number, and the evaluating comprises comparing the movement pattern of the proximity region with a profile movement pattern of an intended gesture, and wherein the false result is returned if the movement pattern of the proximity region does not correspond to the profile movement pattern.

20. A method according to claim 11, wherein the additional information comprises at least one of n previous frames, where n is a natural number, size of the hot spot, shape of the hot spot, number of hot spots, and distance between hot spots, and wherein the additional information is stored in a lookup table.
